# EUROPEAN PATENT APPLICATION

(11) **EP 4 517 665 A1**
(43) Date of publication of application: **05.03.2025**
(21) Application number: 23795920.0
(22) Date of filing: 08.03.2023
(51) Int. Cl.: G06T 7/60, G01B 11/26

(54) **RELATIVE ANGLE DETECTION DEVICE FOR COUPLED VEHICLE**

(30) Priority: 28.04.2022 JP 2022074935
(71) Applicant: JTEKT Corporation, Kariya-shi, Aichi 448-8652 (JP); J-Quad Dynamics Inc., Tokyo 103-0022 (JP)
(72) Inventor: NITTA, Nobuhiro, Tokyo 103-0022 (JP); TOKORO, Hirotaka, Tokyo 103-0022 (JP)
(74) Representative: Winter, Brandl - Partnerschaft mbB
(86) International application number: PCT/JP2023/008844
(87) International publication number: WO 2023/210173

(57) **Abstract**

(Problem) To provide a relative angle detection device for a combination vehicle that can detect a relative angle of a towed vehicle with respect to a towing vehicle without installing on the towed vehicle a marker for detecting the relative angle of the towed vehicle with respect to the towing vehicle. (Solution) A relative angle detection device 6 is used in a combination vehicle 1 in which a towing vehicle 2 and a towed vehicle 3 are connected via a towing-side connecting member 4 and a towed-side connecting member 5. The relative angle detection device 6 includes: an imaging device 61 that is installed on the towed vehicle 3 and that captures an image of the towing vehicle 2; and an arithmetic processing unit 62 that calculates a relative angle of the towed vehicle 3 with respect to the towing vehicle 2 based on information obtained from the imaging device 61.

## Description

### Technical Field

The present invention relates to relative angle detection devices for combination vehicles that are used in combination vehicles in which a towed vehicle is towed by a towing vehicle and that detect a relative angle of the towed vehicle with respect to the towing vehicle.

### Background Art

A combination vehicle is known which is composed of a towed vehicle and a towing vehicle that are connected to each other and which can detect a hitch angle that is an angle of the towed vehicle with respect to the towing vehicle when the combination vehicle is viewed from above.

A trailer angle detection system described in PTL 1 captures an image of a marker on a towed vehicle (trailer) by a camera installed on a towing vehicle and detects a hitch angle based on the position of the marker in the captured image. An edge portion of the towed vehicle or a sticker is used as a marker.

### Citation List

### Patent Literature

PTL 1: US Patent No. 9971943

### Summary of Invention

### Technical Problem

Towed vehicles come in various shapes such as box-shaped campers and boat trailers for carrying a boat. In the system described in PTL 1, when no edge portion with a shape suitable for use as a marker is present at a position where it can be captured by the camera on the towing vehicle, a sticker needs to be attached at an appropriate position on the towed vehicle. This increases the burden on the user, and the attached sticker may affect the external appearance of the towed vehicle.

Therefore, an object of the present invention is to provide a relative angle detection device for a combination vehicle that can detect a relative angle of a towed vehicle with respect to a towing vehicle without installing on the towed vehicle a marker for detecting the relative angle of the towed vehicle with respect to the towing vehicle.

### Solution to Problem

In order to achieve the above object, the present invention provides a relative angle detection device for a combination vehicle. The relative angle detection device is used in the combination vehicle in which a towing vehicle and a towed vehicle are connected via a towing-side connecting member and a towed-side connecting member. The relative angle detection device includes: an imaging device that is installed on the towed vehicle and that captures an image of the towing vehicle; and an arithmetic processing unit that calculates a relative angle of the towed vehicle with respect to the towing vehicle based on information obtained from the imaging device.

### Advantageous Effects of Invention

According to the present invention, it is possible to detect the relative angle of the towed vehicle with respect to the towing vehicle without installing on the towed vehicle a marker for detecting the relative angle of the towed vehicle with respect to the towing vehicle.

### Brief Description of Drawings

(FIG. 1A) FIG. 1A is a schematic diagram of a combination vehicle whose relative angle is to be detected according to an embodiment of the present invention, as viewed from above.
(FIG. 1B) FIG. 1B is a schematic diagram of the combination vehicle as viewed from the left in the forward travel direction.
(FIG. 1C) FIG. 1C is a schematic diagram of the combination vehicle as viewed from the rear.
(FIG. 2A) FIG. 2A is a structure diagram showing an example of the structures of a towing-side connecting member and a towed-side connecting member.
(FIG. 2B) FIG. 2B is a sectional view of the towing-side connecting member and the towed-side connecting member that are in a combined state.
(FIG. 3) FIG. 3 is a block diagram showing functional configurations of a relative angle detection device.
(FIG. 4) FIG. 4 is an illustration showing an example of a rear end of a towing vehicle whose image is to be captured by an imaging device.
(FIG. 5) FIG. 5 is an illustration showing a front end face of a towed vehicle.
(FIG. 6A) FIG. 6A is an illustration of the combination vehicle that is traveling straight ahead, as viewed from above in the vertical direction.
(FIG. 6B) FIG. 6B is an illustration of the combination vehicle that is traveling straight ahead, as viewed from the left side of the towing vehicle and the towed vehicle.
(FIG. 7) FIG. 7 is a schematic diagram showing the positional relationship among the towing vehicle, the towed vehicle, and the imaging device when the towed vehicle is tilted horizontally to the left relative to the towing vehicle and a hitch angle is generated.
(FIG. 8) FIG. 8 is a schematic diagram showing the positional relationship among the towing vehicle, the towed vehicle, and the imaging device when the towed vehicle is tilted upward relative to the towing vehicle and a relative pitch angle is generated.
(FIG. 9) FIG. 9 is an illustration showing the rear end of the towing vehicle as viewed from the towed vehicle when the towed vehicle is rolling relative to the towing vehicle.
(FIG. 10) FIG. 10 is a flowchart showing an example of a processing procedure that is performed by an arithmetic processing unit to calculate a hitch angle, a relative pitch angle, and a relative roll angle.

### Description of Embodiments

### (Embodiment)

An embodiment of the present invention will be described with reference to the drawings. The embodiment described below is shown as a specific example suitable for carrying out the present invention, and part of the embodiment specifically illustrates various technical matters that are technically preferable. However, the technical scope of the present invention is not limited to this specific embodiment.

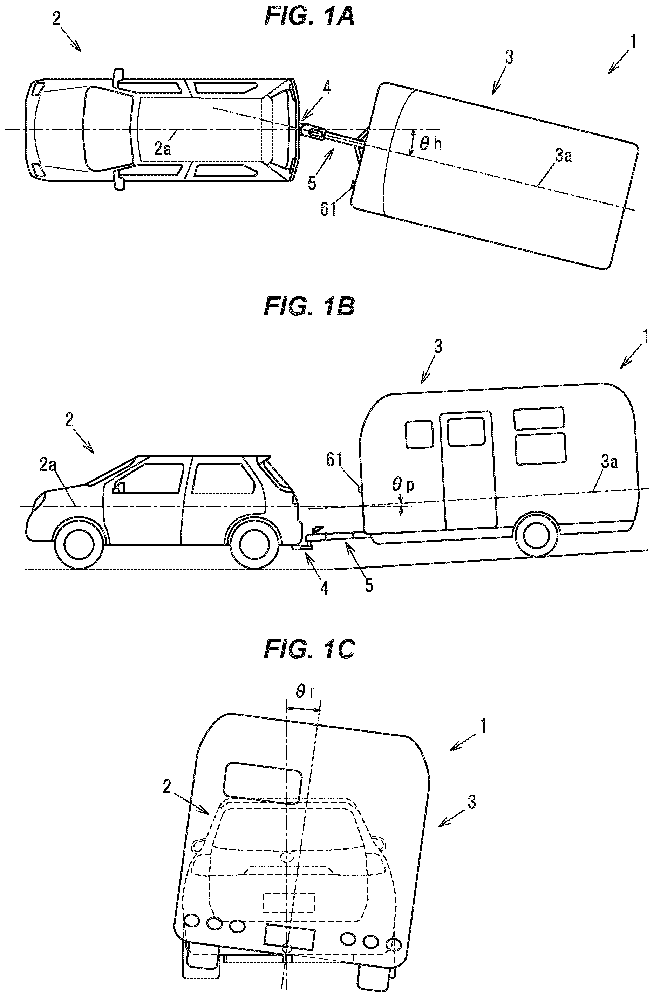

FIGS. 1A, 1B, and 1C are schematic diagrams of a combination vehicle 1 with a relative angle detection device on which the relative angle detection device according to the embodiment of the present invention is mounted. FIG. 1A shows the combination vehicle 1 as viewed from above, and FIG. 1B shows the left side of the combination vehicle 1 in the forward travel direction. FIG. 1C shows the combination vehicle 1 as viewed from the rear. In FIGS. 1A and 1B, each of a center line 2a of a towing vehicle 2 in the front-rear direction of the towing vehicle 2 and a center line 3a of a towed vehicle 3 in the front-rear direction of the towed vehicle 3 is shown by a long dashed short dashed line.

The combination vehicle 1 includes the towing vehicle 2 and the towed vehicle 3, and the towing vehicle 2 and the towed vehicle 3 are connected by a towing-side connecting member 4 and a towed-side connecting member 5. FIGS. 1A, 1B, and 1C show a case where the towed vehicle 3 is a box-shaped camper. However, the towed vehicle is not limited to this, and may be, for example, a boat trailer loaded with a boat. The towing vehicle 2 may be a manually driven vehicle in which a driver performs driving operations such as steering operations, or may be an autonomous vehicle in which part or all of driving operations are performed autonomously.

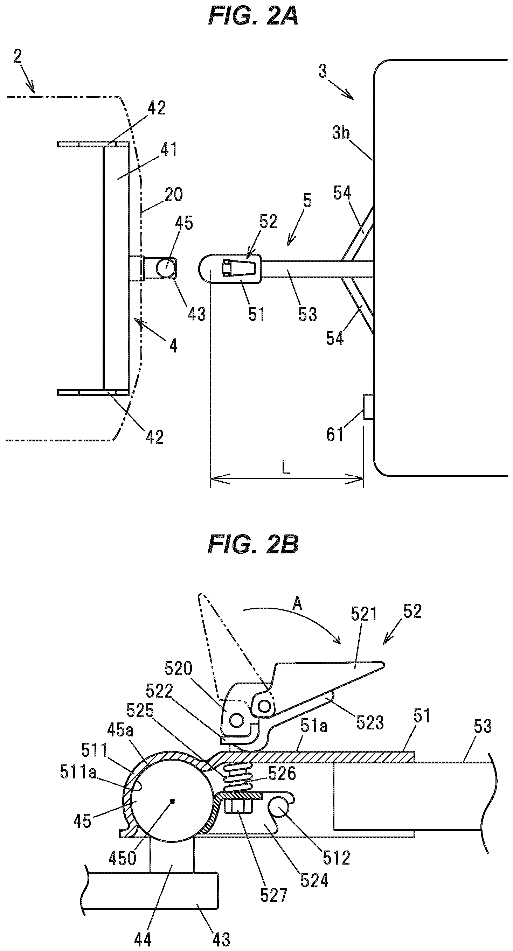

FIG. 2A is a structure diagram showing an example of the structures of the towing-side connecting member 4 and the towed-side connecting member 5. FIG. 2B is a sectional view of the towing-side connecting member 4 and the towed-side connecting member 5 in a combined state.

The towing-side connecting member 4 includes: a hitch cross member 41 disposed in the vehicle width direction of the towing vehicle 2; a pair of hitch side members 42 fixed to both ends of the hitch cross member 41; a ball mount 43 provided so as to protrude from the middle portion in the vehicle width direction of the hitch cross member 41 toward the rear side of the towing vehicle 2; a hitch pin 44 protruding upward from the ball mount 43; and a spherical hitch ball 45 integral with the upper end of the hitch pin 44. The hitch cross member 41 and the pair of hitch side members 42 are disposed inside a rear bumper 20 of the towing vehicle 2. The ball mount 43, the hitch pin 44, and the hitch ball 45 are exposed rearward from the rear bumper 20. The pair of hitch side members 42 is fixed to a body of the towing vehicle 2 by a plurality of bolts.

The towed-side connecting member 5 includes: a coupler 51 that covers the hitch ball 45; a latch mechanism 52 that retains the coupler 51 on the hitch ball 45; a rod-shaped tongue 53 with the coupler 51 fixed to its distal end; and a pair of side beams 54 extending in a direction tilted with respect to the longitudinal direction of the tongue 53. Each of the side beams 54 has its one end connected to the tongue 53. A proximal end of the tongue 53 and the other end of each of the pair of side beams 54 are connected to a chassis of the towed vehicle 3.

As shown in FIG. 2B, the coupler 51 includes a cup portion 511 that holds the hitch ball 45. The latch mechanism 52 includes: a lever support 520; a lever 521 that is rotated with respect to the lever support 520; a latch plate 522 that faces an upper surface 51a of the coupler 51; a latch bar 523 that enters between the upper surface 51a of the coupler 51 and the latch plate 522 when the lever 521 is operated; a lock plate 524 that receives the hitch ball 45 from below; a coil spring 525 that biases the lock plate 524 downward; and a bolt 526 and a nut 527 that connect the latch plate 522 and the lock plate 524.

The lock plate 524 is rotatable about a support pin 512 that is provided horizontally to the coupler 51. When the lever 521 is operated as shown by an arrow A in FIG. 2B, the latch plate 522 is lifted upward with respect to the coupler 51 by the latch bar 523, and the lock plate 524 retains the hitch ball 45. An inner surface 511a of the cup portion 511 of the coupler 51 is a concave spherical surface having a curvature corresponding to the curvature of a surface 45a of the hitch ball 45. The coupler 51 is swingable in any direction about the center point of the hitch ball 45 due to sliding between the inner surface 511a of the cup portion 511 and the surface 45a of the hitch ball 45. Hereinafter, the center point of this hitch ball 45 will be referred to as hitch point 450.

In the combination vehicle 1, the relative angle of the towed vehicle 3 with respect to the towing vehicle 2 changes variously. Particularly when the combination vehicle 1 reverses with the towed vehicle 3 located on the front side in the direction of travel, the relative angle of the towed vehicle 3 with respect to the towing vehicle 2 serves as an important indicator for performing driving operations. For this reason, the relative angle detection device is used in the combination vehicle 1. When the towing vehicle 2 is a manually driven vehicle (non-autonomous vehicle), an image showing the detection results from the relative angle detection device is displayed on a display installed inside a cabin of the towing vehicle 2, thereby assisting the driver in driving operations. When the towing vehicle 2 is an autonomous vehicle, the towing vehicle 2 is autonomously steered based on the detection results from the relative angle detection device.

The relative angle of the towed vehicle 3 with respect to the towing vehicle 2 includes: a hitch angle that indicates tilt of the towed vehicle 3 in the horizontal direction with respect to the towing vehicle 2; a relative pitch angle that indicates tilt of the towed vehicle 3 in the up-down direction with respect to the towing vehicle 2; and a relative roll angle that is the difference between a roll angle of the towing vehicle 2 and a roll angle of the towed vehicle 3. FIG. 1A shows a hitch angle θh when the towed vehicle 3 is tilted to the left with respect to the towing vehicle 2. FIG. 1B shows a relative pitch angle θp when the towed vehicle 3 is tilted upward with respect to the towing vehicle 2. FIG. 1C shows a relative roll angle θr when the towed vehicle 3 is tilted clockwise with respect to the towing vehicle 2 as viewed from the rear of the combination vehicle 1.

The relative angle detection device according to the embodiment can detect the hitch angle, relative pitch angle, and relative roll angle of the towed vehicle 3 with respect to the towing vehicle 2. Next, the configuration, placement, and operation of the relative angle detection device will be described.

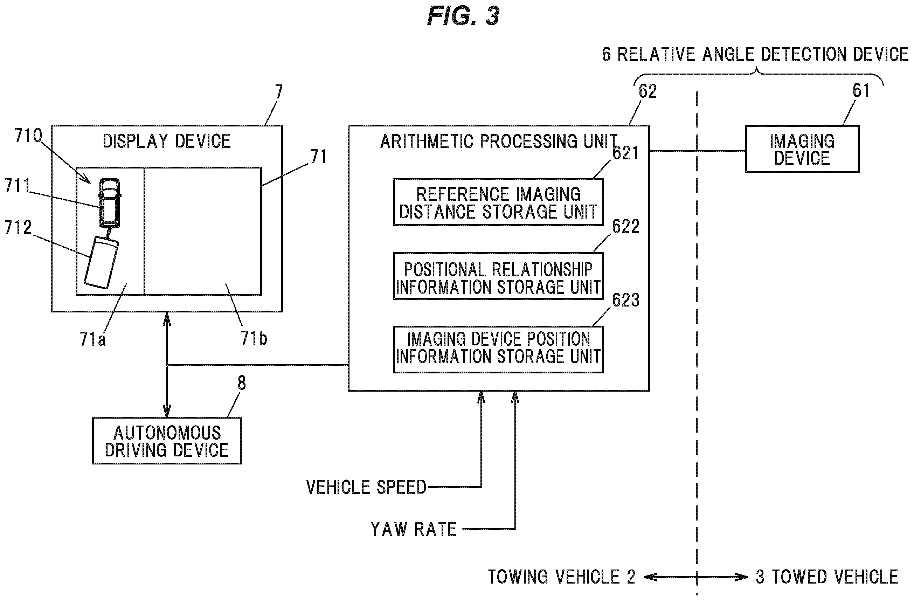

FIG. 3 is a block diagram showing functional configurations of a relative angle detection device 6. The relative angle detection device 6 includes: an imaging device 61 that is installed on the towed vehicle 3 and that captures an image of the towing vehicle 2; and an arithmetic processing unit 62 that calculates the relative angle of the towed vehicle 3 with respect to the towing vehicle 2 based on information obtained from the imaging device 61. The imaging device 61 captures an image of the towing vehicle 2 according to a command from the arithmetic processing unit 62, and sends information on the captured image to the arithmetic processing unit 62. The imaging device 61 and the arithmetic processing unit 62 can communicate with each other by, for example, wireless signals.

As shown in FIG. 2A, the imaging device 61 is installed on a front end face 3b of the towed vehicle 3. Hereinafter, the length L (see FIG. 2A) in the front-rear direction of the towed vehicle 3 from the hitch point 450 to the imaging device 61 when the towing-side connecting member 4 and the towed-side connecting member 5 are connected will be referred to as reference imaging distance. In the example shown in FIG. 2A, the reference imaging distance is the length of the towed-side connecting member 5 from the hitch point 450 to the towed vehicle 3.

The arithmetic processing unit 62 includes: a reference imaging distance storage unit 621 that stores information on the reference imaging distance; a positional relationship information storage unit 622 that stores positional relationship information indicating the relative positional relationships between each feature point of the towing vehicle 2 captured by the imaging device 61 and the hitch point 450; and an imaging device position information storage unit 623 that stores information on the installation position of the imaging device 61 on the towed vehicle 3. The arithmetic processing unit 62 can acquire information on the traveling state of the towing vehicle 2, such as the vehicle speed and the yaw rate, via a communication network such as a CAN (Controller Area Network). The arithmetic processing unit 62 detects the relative angle of the towed vehicle 3 with respect to the towing vehicle 2 based on these pieces of information.

The detection results of the relative angle from the arithmetic processing unit 62 are sent to, for example, a display device 7 of the towing vehicle 2, and as shown in FIG. 3, an image showing the detection results from the relative angle detection device 6 is displayed on a touch panel display 71 inside the vehicle cabin. FIG. 3 shows a display example in which a bird's-eye view image 710 showing a graphic symbol 711 representing the towing vehicle 2 and a graphic symbol 712 representing the towed vehicle 3 in a tilted state according to the hitch angle detected by the relative angle detection device 6 is displayed in a first display area 71a of the touch panel display 71. For example, an image captured by the imaging device 61 is displayed in a second display area 71b of the touch panel display 71.

The driver performs steering operations while taking the content displayed on the touch panel display 71 into consideration. The touch panel display 71 may display an image showing a recommended direction of rotation of a steering wheel according to the hitch angle detected by the relative angle detection device 6. When the towing vehicle 2 is an autonomous vehicle, the detection results from the relative angle detection device 6 are output to an autonomous driving device 8.

Information on the reference imaging distance is input by, for example, the user of the towing vehicle 2 and towed vehicle 3 and is stored in the reference imaging distance storage unit 621 of the arithmetic processing unit 62. For example, this input can be performed via the touch panel display 71. In the case where the user owns a plurality of towed vehicles 3 (e.g., a camper, a boat trailer, a personal watercraft trailer, a jet ski trailer, etc.), the user can set the reference imaging distance when the towed vehicle 3 is replaced, so that the relative angle detection device 6 can appropriately detect the hitch angle and the relative pitch angle.

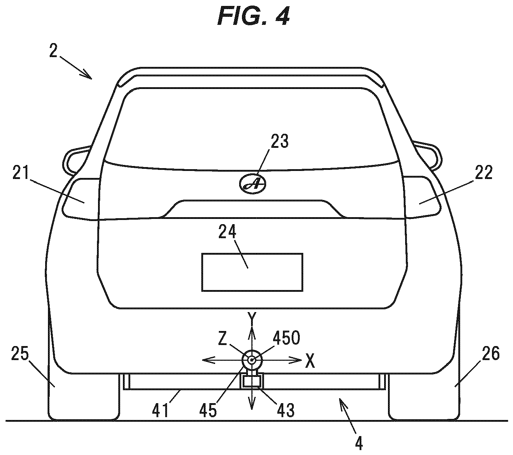

FIG. 4 is an illustration showing an example of a rear end of the towing vehicle 2 whose image is to be captured by the imaging device 61. A pair of left and right lamps 21, 22, a logo 23, and a license plate 24 are installed on the rear end of the towing vehicle 2. Left and right rear wheels 25, 26 are also targets to be captured by the imaging device 61. The lamps 21, 22, the logo 23, the license plate 24, and the rear wheels 25, 26 are unique structures of the towing vehicle 2, and are the feature points of the towing vehicle 2 that are contained in an image captured by the imaging device 61. The lamps 21, 22 are rear combination lamps each composed of a brake light, a turn signal light, a tail light, and a reversing light. The structures of the towing vehicle 2 are things that are installed on the towing vehicle 2 at the time of manufacture of the towing vehicle 2, and that the towing vehicle 2 of that model has as part of its body structure.

An XYZ orthogonal coordinate system using the hitch point 450 as the origin of each coordinate axis is defined as shown in FIG. 4. The X-axis is a coordinate axis in the vehicle width direction of the towing vehicle 2, and the Y-axis is a coordinate axis in the up-down direction of the towing vehicle 2. The Z axis is a coordinate axis in the front-rear direction of the towing vehicle 2. The positional relationship information storage unit 622 of the arithmetic processing unit 62 stores the X-coordinates, Y-coordinates, and Z-coordinates of the lamps 21, 22, logo 23, license plate 24, and rear wheels 25, 26 that are the feature points of the towing vehicle 2. For example, these coordinate values are input to the arithmetic processing unit 62 by an operator when the towing-side connecting member 4 is attached to the towing vehicle 2, and are stored in the positional relationship information storage unit 622. The coordinate values of each feature point may be measured by, for example, the operator etc., or may be provided to the operator via a paper medium or electronic storage medium that comes with the towing-side connecting member 4 and that has recorded thereon the coordinate values of the feature points for each supported vehicle model.

The imaging device 61 is installed by, for example, the user of the towed vehicle 3. In this case, the imaging device 61 is not always installed at the middle position in the vehicle width direction of the towed vehicle 3, and may be installed offset to the right or left from the middle in the vehicle width direction of the towed vehicle 3. In the present embodiment, the arithmetic processing unit 62 calculates the installation position of the imaging device 61 from the information that is obtained from the imaging device 61 when the combination vehicle 1 is traveling straight ahead. The arithmetic processing unit 62 detects the relative angle of the towed vehicle 3 with respect to the towing vehicle 2 by taking into consideration the calculated installation position of the imaging device 61. The specific processing content of the arithmetic processing unit 62 will be described in detail below.

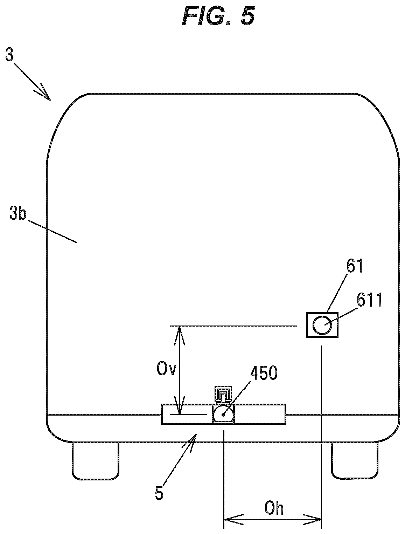

FIG. 5 is an illustration showing the front end face 3b of the towed vehicle 3 together with the towed-side connecting member 5 and the hitch point 450. In FIG. 5, Oh shows the amount by which the installation position of the imaging device 61 is offset from the hitch point 450 in the horizontal direction (vehicle width direction of the towed vehicle 3), and Ov shows the amount by which the installation position of the imaging device 61 is offset from the hitch point 450 in the vertical direction. The installation position of the imaging device 61 herein specifically refers to the center position of a lens 611 of the imaging device 61.

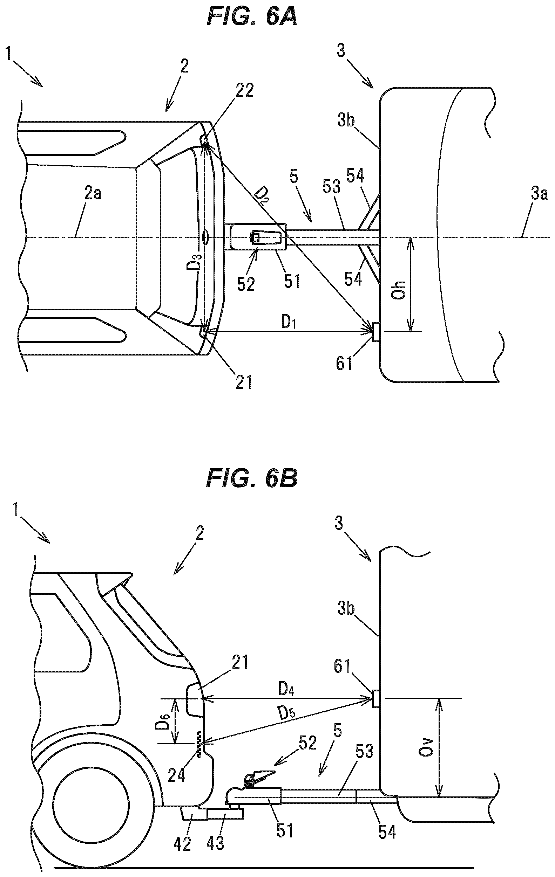

FIG. 6A is an illustration of the combination vehicle 1 that is traveling straight ahead, as viewed from above in the vertical direction. FIG. 6B is an illustration of the combination vehicle 1 that is traveling straight ahead, as viewed from the left side of the towing vehicle 2 and the towed vehicle 3. When traveling straight ahead, the towing vehicle 2 and the towed vehicle 3 are aligned in a straight line in the direction of travel, and the hitch angle, relative pitch angle, and relative roll angle are substantially zero.

The arithmetic processing unit 62 can detect the distances between the imaging device 61 and the feature points of the towing vehicle 2 from the information obtained from the imaging device 61. The distances can be detected by, for example, analyzing images of each feature point that are captured with different focuses (focal lengths) of the imaging device 61.

The horizontal offset amount Oh of the imaging device 61 can be obtained from, for example, the distances D₁, D₂ between the imaging device 61 and the pair of left and right lamps 21, 22. When the offset amount Oh is zero, the distance D₁ and the distance D₂ are equal. As the offset amount Oh increases, the difference between the distance D₁ and the distance D₂ increases. The arithmetic processing unit 62 can calculate the distance D₃ between the pair of left and right lamps 21, 22 from the information stored in the positional relationship information storage unit 622, and can therefore calculate the offset amount Oh from the relationships between the distances D₁, D₂, and D₃ based on the theory of trigonometric functions.

The vertical offset amount Ov of the imaging device 61 can be obtained from the distances between the imaging device 61 and a plurality of feature points located at different vertical positions. For example, when the distances D₄, D₅ between the imaging device 61 and the left lamp 21 and license plate 24 are known, the distance D₆ between the lamp 21 and the license plate 24 can be calculated from the information stored in the positional relationship information storage unit 622. Therefore, the offset amount Ov can be calculated based on the theory of trigonometric functions in a manner similar to that described above.

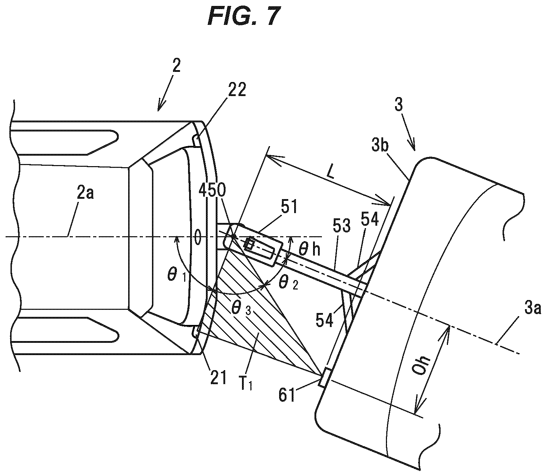

FIG. 7 is a schematic diagram showing the positional relationship among the towing vehicle 2, the towed vehicle 3, and the imaging device 61 when the towed vehicle 3 is tilted horizontally to the left relative to the towing vehicle 2 and a hitch angle θh is generated. In FIG. 7, θ₁ is the angle between a straight line connecting the hitch point 450 and the left lamp 21 and the center line 2a of the towing vehicle 2, and can be calculated from the information stored in the positional relationship information storage unit 622. θ₂ is the angle between a straight line connecting the hitch point 450 and the imaging device 61 and the center line 3a of the towed vehicle 3, and can be calculated from the reference imaging distance L and the horizontal offset amount Oh.

θ₃ is the angle between the straight line connecting the hitch point 450 and the left lamp 21 and the straight line connecting the hitch point 450 and the imaging device 61, and can be calculated from the lengths of each side of a triangle T₁ whose vertices are the hitch point 450, the left lamp 21, and the imaging device 61. The distance between the hitch point 450 and the imaging device 61 in FIG. 7 is calculated from the root sum square of the reference imaging distance L and the offset amount Oh. The distance between the hitch point 450 and the left lamp 21 can be calculated from the information stored in the positional relationship information storage unit 622. The distance between the imaging device 61 and the left lamp 21 can be obtained by analyzing an image captured by the imaging device 61. As shown in FIG. 7, the hitch angle θh can be obtained from θ₁, θ₂, and θ₃ by the arithmetic expression 180 (°) - θ₁ - θ₂ - θ₃.

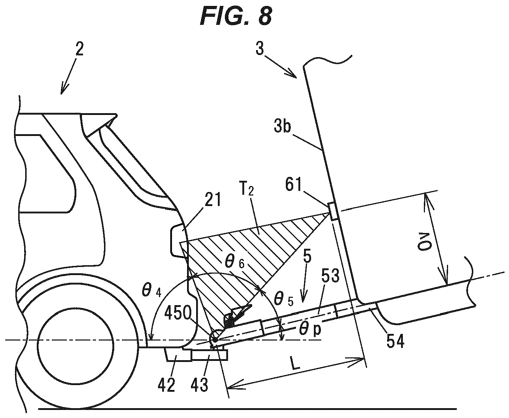

FIG. 8 is a schematic diagram showing the positional relationship among the towing vehicle 2, the towed vehicle 3, and the imaging device 61 when the towed vehicle 3 is tilted upward relative to the towing vehicle 2 and a relative pitch angle θp is generated. In FIG. 8, θ₄ is the angle between a straight line connecting the hitch point 450 and the left lamp 21 and a straight line passing through the hitch point 450 and parallel to the front-rear direction of the towing vehicle 2, and can be calculated from the information stored in the positional relationship information storage unit 622. θ₅ is the angle between a straight line connecting the hitch point 450 and the imaging device 61 and a straight line passing through the hitch point 450 and parallel to the front-rear direction of the towed vehicle 3, and can be calculated from the reference imaging distance L and the vertical offset amount Ov.

θ₆ is the angle between the straight line connecting the hitch point 450 and the left lamp 21 and the straight line connecting the hitch point 450 and the imaging device 61, and can be calculated from the lengths of each side of a triangle T₂ whose vertices are the hitch point 450, the left lamp 21, and the imaging device 61. The distance between the hitch point 450 and the imaging device 61 in FIG. 8 is calculated from the root sum square of the reference imaging distance L and the offset amount Ov. The distance between the hitch point 450 and the left lamp 21 can be calculated from the information stored in the positional relationship information storage unit 622. The distance between the imaging device 61 and the left lamp 21 can be obtained by analyzing an image captured by the imaging device 61. As shown in FIG. 7, the relative pitch angle θp can be obtained from θ₄, θ₅, and θ₆ by the arithmetic expression 180 (°) - θ₄ - θ₅ - θ₆.

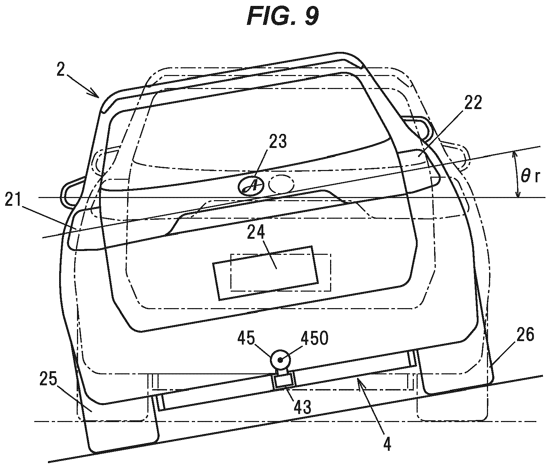

FIG. 9 is an illustration showing the rear end of the towing vehicle 2 as viewed from the towed vehicle 3 that is rolling relative to the towing vehicle 2. When the towed vehicle 3 rolls with respect to the towing vehicle 2, a straight line connecting the left and right lamps 21, 22, namely a straight line that extends in the horizontal direction when the relative roll angle θr is zero, is tilted relative to the horizontal direction. The arithmetic processing unit 62 can detect this tilt from information in the image captured by the imaging device 61 and obtain the relative roll angle.

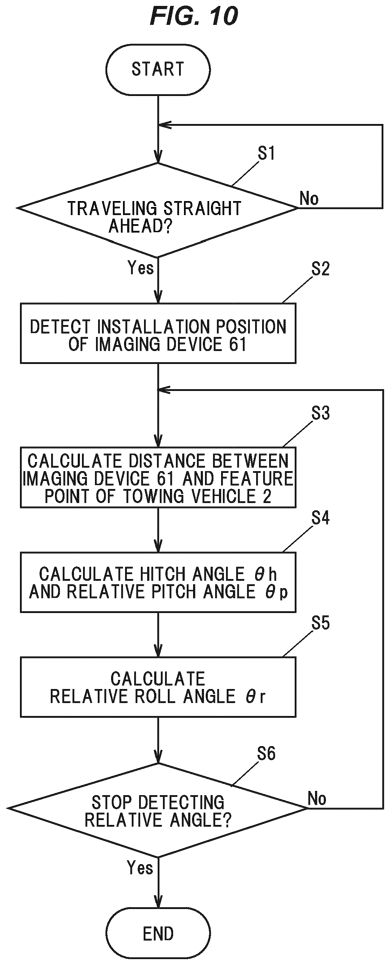

FIG. 10 is a flowchart showing an example of a processing procedure that is performed by the arithmetic processing unit 62 to calculate the hitch angle θh, the relative pitch angle θp, and the relative roll angle θr. It is herein assumed that the reference imaging distance storage unit 621 and the positional relationship information storage unit 622 of the arithmetic processing unit 62 have information on the reference imaging distance and information on the positional relationship information stored therein in advance.

In the process of the flowchart shown in FIG. 10, the arithmetic processing unit 62 first determines whether the combination vehicle 1 is traveling straight ahead (step S1). The combination vehicle 1 traveling straight ahead can be detected from, for example, the vehicle speed being equal to or higher than a predetermined value and the yaw rate being substantially zero. When the result of this determination is Yes, the arithmetic processing unit 62 detects the installation position of the imaging device 61 from information on the distances between the imaging device 61 and the feature points of the towing vehicle 2 that is obtained from the imaging device 61 (step S2). Specifically, the offset amount Oh and the offset amount Ov that indicate the installation position of the imaging device 61 on the towed vehicle 3 are calculated.

The arithmetic processing unit 62 then calculates the distance between the imaging device 61 and at least one of the feature points of the towing vehicle 2 (e.g., the left lamp 21) based on the information from the imaging device 61 (step S3), and calculates the hitch angle θh and the relative pitch angle θp as described above (step S4). The arithmetic processing unit 62 also calculates the relative roll angle θr from the tilt of the positions of a plurality of the feature points (e.g., the positions of the left and right lamps 21, 22) in the image captured by the imaging device 61 (step S5).

Thereafter, the arithmetic processing unit 62 determines whether to stop detecting the hitch angle θh, the relative pitch angle θp, and the relative roll angle θr (step S6). When the result of this determination is No, the processing of steps S3 to S5 is repeated. For example, the arithmetic processing unit 62 determines to stop detecting the hitch angle θh, the relative pitch angle θp, and the relative roll angle θr when the vehicle speed of the towing vehicle 2 becomes zero or when a shift lever is shifted to P (parking) range.

The processing of step S2 only needs to be performed at least once when the information in the reference imaging distance storage unit 621 or the positional relationship information storage unit 622 is newly stored or updated or when the installation position of the imaging device 61 is changed. Thereafter, the hitch angle θh, the relative pitch angle θp, and the relative roll angle θr may be calculated using the stored information on the offset amount Oh and the offset amount Ov.

The distance between one of the plurality of feature points of the towing vehicle 2 and the imaging device 61 may be calculated in the processing of step S3, and the hitch angle θh, the relative pitch angle θp, and the relative roll angle θr may be calculated in the processing of steps S4, S5 based on this calculation result. Alternatively, the distances between each of the plurality of feature points of the towing vehicle 2 and the imaging device 61 may be calculated, and the averages of the calculation results of the hitch angles θh, relative pitch angles θp, and relative roll angles θr obtained based on the calculation results of the distances to each of the feature points may be calculated and used as detection results. This improves the accuracy of the results of detection of the relative angle by the relative angle detection device 6.

### (Effects of Embodiment)

According to the embodiment described above, the arithmetic processing unit 62 calculates the hitch angle θh, the relative pitch angle θp, and the relative roll angle θr based on the information obtained from the imaging device 61 that is installed on the towed vehicle 3 and that captures an image of the towing vehicle 2. Therefore, the relative angle of the towed vehicle with respect to the towing vehicle can be detected without installing on the towed vehicle 3 a marker for detecting the relative angle of the towed vehicle 3 with respect to the towing vehicle 2.

The arithmetic processing unit 62 calculates the installation position of the imaging device 61 on the towed vehicle 3 from the information that is obtained from the imaging device 61 when the combination vehicle 1 is traveling straight ahead, and detects the relative angle of the towed vehicle with respect to the towing vehicle by taking this installation position into consideration. Therefore, there is no need for the user to store the installation position of the imaging device 61 in the arithmetic processing unit 62, and the hitch angle θh, the relative pitch angle θp, and the relative roll angle θr can be accurately obtained while reducing the burden on the user.

### (Additional Notes)

Although the present invention has been described above based on the embodiment, the embodiment is not intended to limit the invention according to the claims. It should be noted that not all of the combinations of the features described in the embodiment are essential as means for solving the problem of the invention. The present invention may be modified as appropriate by omitting part of the components or adding or replacing components without departing from the spirit and scope of the present invention.

### Reference Signs List

1 COMBINATION VEHICLE
2 TOWING VEHICLE
21, 22 LAMP
23 LOGO
24 LICENSE PLATE
25, 26 REAR WHEEL
3 TOWED VEHICLE
4 TOWING-SIDE CONNECTING MEMBER
45 HITCH BALL
450 HITCH POINT
5 TOWED-SIDE CONNECTING MEMBER
51 COUPLER
6 RELATIVE ANGLE DETECTION DEVICE
61 IMAGING DEVICE
62 ARITHMETIC PROCESSING UNIT

## Claims

1. A relative angle detection device for a combination vehicle, the relative angle detection device being used in the combination vehicle in which a towing vehicle and a towed vehicle are connected via a towing-side connecting member and a towed-side connecting member, the relative angle detection device comprising:
an imaging device that is installed on the towed vehicle and that captures an image of the towing vehicle; and
an arithmetic processing unit that calculates a relative angle of the towed vehicle with respect to the towing vehicle based on information obtained from the imaging device.

2. The relative angle detection device for the combination vehicle according to claim 1, wherein the arithmetic processing unit detects the relative angle by taking into consideration an installation position of the imaging device that is based on the information obtained from the imaging device when the combination vehicle is traveling straight ahead.

3. The relative angle detection device for the combination vehicle according to claim 2, wherein the arithmetic processing unit calculates the installation position of the imaging device from a position of a feature point of the towing vehicle that is contained in the image captured by the imaging device when the combination vehicle is traveling straight ahead.

4. The relative angle detection device for the combination vehicle according to claim 3, wherein:
the towing-side connecting member includes a spherical hitch ball;
the towed-side connecting member includes a coupler that holds the hitch ball; and
the arithmetic processing unit stores positional relationship information indicating a relative positional relationship between a hitch point that is a center point of the hitch ball and the feature point, and detects the relative angle based on a distance between the imaging device and the feature point and the positional relationship information.

5. The relative angle detection device for the combination vehicle according to claim 3 or 4, wherein the feature point is a structure of the towing vehicle.
